Europäisches Patentamt

European Patent Office

Office européen des brevets

(19)

(11) **EP 0 380 248 B2**

(12) NEW EUROPEAN PATENT SPECIFICATION

(45) Date of publication and mention
of the opposition decision:
**03.12.1997 Bulletin 1997/49**

(51) Int Cl.6: **C08B 37/00**, A23G 3/00,
A23G 9/02

(45) Mention of the grant of the patent:
**18.11.1993 Bulletin 1993/46**

(21) Application number: **90300577.5**

(22) Date of filing: **19.01.1990**

(54) **Modified polydextrose and process therefor**

Modifizierte Polydextrose und deren Herstellung

Polydextrose modifié et sa préparation

(84) Designated Contracting States:
**AT BE CH DE DK ES FR GB GR IT LI LU NL SE**

(30) Priority: **26.01.1989 US 302153**

(43) Date of publication of application:
**01.08.1990 Bulletin 1990/31**

(73) Proprietor: **PFIZER INC.**
**New York, N.Y. 10017 (US)**

(72) Inventors:
- **Guzek, Donald Brian**
  **Stonington, Connecticut (US)**
- **Hausman, Russell Joseph**
  **East Lyme, Connecticut (US)**
- **Shah, Bharat Kiritkumar**
  **Terre Haute, Indiana (US)**

(74) Representative: **Patentanwälte**
**Zellentin & Partner**
**Zweibrückenstrasse 15**
**80331 München (DE)**

(56) References cited:
EP-A- 0 289 461     EP-A- 0 473 333
GB-A- 1 262 842     GB-A- 2 206 582
US-A- 3 766 165     US-A- 4 622 233

- **"Duolite ion-exchange manual" : Diamond Shamrock Corporation, 1969**
- **Technical product data on "Amberlite IRA-93", Rohm & Haas Co., 1981**
- **Technical product data on "X.US-40285", Dow Chemical Co.**
- **Kirk-Othmer Encyclopedia of Chemical Technology, 3rd edition, p 450**
- **Sensory Evaluation Techniques, 2nd edition, pp. 173-175, Meilgaard M. et al. : "Spectrum Intensity Scales for Descriptive Analysis"**

Remarks:
The file contains technical information submitted after the application was filed and not included in this specification

## Description

This invention relates to an improved, water-soluble polydextrose containing bound citric acid, to a process therefor, and to foods containing same. Bound citric acid is in the form of citrate esters which are primarily dibasic, and so generally retain a measure of acidity. While the process coincidentally reduces free citric acid to less than 0.1 mol %, this can be added back where acidity is desired.

Polydextrose (also known as polyglucose or poly-d-glucose) is prepared by melting and heating dextrose (also known as glucose or d-glucose), preferably with about 5-15% by weight of sorbitol present, in the presence of a catalytic amount (about 0.5 to 3 mol %) of citric acid. It is an approved food additive; and is one of the subjects of Rennhard, U.S. Patent 3,766,165 which claims, inter alia, a water-soluble polydextrose characterized by its content of from about 0.5 to 5 mol % of bound citric acid; and of Rennhard, U.S. Patent 3,876,794 which claims various foods containing same. However, as noted by Torres in U.S. Patent 4,622,233, Rennhard's polydextrose possesses a slight bitter taste which limits the breadth of its use in foods.

Torres believed that the bitter taste of Rennhard's polydextrose was due to the presence of anhydroglucose. While that compound has not been ruled out as one of the factors in the bitter taste, we have now surprisingly found that bound citric acid (i.e. the 0.5 to 5% mol % of citric acid ester groups which characterize Rennhard's polydextrose) is a major if not the most impotant factor in said bitter taste.

Rennhard suggested the use of ion exchange as a method of reducing the acidity of his polydextose; e.g., at column 6, lines 48-50 of U.S. 3,766,185. However, use of a strongly basic exchange resin, i.e., the type which is conventionally used to separate out carboxylic acids leads to polydextrose with taste inferior to that of polydextrose treated with weaker base resin. Weakly basic ion exchange resin is not ordinarily recommended for the removal of carboxylic acid. Thus, it was a most unexpected result when it was found that such resin greatly reduced the level of both citric acid and bound citric acid, while at the same time greatly decreasing or virtually eliminating the objectionable bitter taste of the polydextrose.

The present invention is directed to an improved water-soluble highly-branched polydextrose wherein the linkage $1 \rightarrow 6$ predominates, having number average molecular weight between 1,500 and 18,000 which is characterized by its content of from 0,058 to 0,1075 mol percent (0,061 to 0,129 weight percent) of citric acid bound in the form of ester groups. The content of free citric acid is preferably less than 0.1 mol percent (0.12 weight percent). In its preferred form, the present polydextrose contains 5 to 15% by weight of sorbitol residues, and less than 0.05 mol percent (0.06 weight percent) of free citric acid.

In its more preferred form, the present polydextrose contains 8 to 12% by weight of sorbitol residues.

The present invention is also directed to foodstuffs comprising said improved polydextrose particularly those further comprising one or more sweetening agents selected from the group consisting of alitame, aspartame, acesulfame and saccharin, most particularly to those further comprising alitame; and to dry low calorie sweetener compositions comprising at least 50% by weight of said improved polydextrose and one or more sweetening agents selected from the group consisting of alitame, aspartame, acesulfame and saccharin, particularly one with alitame.

Furthermore, the present invention is directed to a process for preparing said improved polydextrose which comprises the steps of:

(a) melting dextrose containing 0.5 to 3 mol percent (0.53 to 3.2 weight %) of citric acid at a temperature below its decomposition point, maintaining said molten mixture at a temperature of 140 to 295°C and at reduced pressure in the substantial absence of water until substantial polymerization occurs and simultaneously removing water formed during said polymerization; and

(b) passing a concentrated aqueous solution of the resulting polymeric product through an adsorbent resin or a weakly basic ion exchange resin, and recovering said polyglucose substantially free of water.

Preferably, from about 5 to 15% of sorbitol by weight is incorporated into the mixture prior to melting and polymerization; even more preferred is to incorporate sorbitol in the range of about 8 to 12% by weight. The reduced pressure is preferably less than 300 mm (40 KPa) of mercury. The preferred level of citric acid in the polymerization is in the range of 0.7 to 1.3 mol percent (0.68 to 1.27 weight percent). The preferred resin is a weakly basic ion exchange resin, particularly one containing tertiary amine functionality on a matrix which is a copolymer of styrene and divinylbenzene. The most preferredd ion exchange resin is Amberlite IRA-93® manufactured by Rohm and Hass. When an adsorption resin is used, the preferred resin is a dimethylamine functionalized chloromethylated copolymer of styrene and divinylbenzene, for example Dow's XU-40285.00.

In the preferred method of isolating the present improved polydextrose, water is removed using film evaporation.

As used here and elsewhere herein, "bound citric acid" refers to citric acid which is released when polydextrose is subjected to base catalyzed hydrolysis conditions. The "mol % of citric acid" used as catalyst in the polymerization is calculated from the weight % of citric acid as follows:

$$\frac{\dfrac{\text{wt citric acid}}{192} \times 100}{\dfrac{\text{wt citric acid}}{192} + \dfrac{\text{wt glucose}}{180*} + \dfrac{\text{wt sorbitol}}{182}}$$

*198 if the monohydrate is used.

In the unimproved polydextrose product formed in step (a) of the present process the total wt % of bound and unbound citric acid will be increased in the polymerization by the fact that water is lost in this process. However, the total mol % of bound and unbound citric acid will stay the same since there is no net loss of glucose, sorbitol or citric acid residues. Thus, the mol % of unbound and bound citric acid in unimproved polydextrose is readily calculated from the proportions by weight of each of free and bound citric acid to total citric acid, factored by the mol % of citric acid originally introduced into the polymerization. However, when the polydextrose is modified and improved according to step (b) of the present process, underdetermined amounts of bound and unbound citric acid, as well as glucose and sorbitol residues are removed, such that as a practical matter, the mol % of either bound or unbound citric acid is best calculated by simply multiplying the weight % by 162/192, the ratio of the molecular weights of a glucose unit (glucose - $H_2O$) and of citric acid. For the sake of conformity and ease of comparison with Rennhard's U.S. patents cited above, such mol % values for free and bound citric acid are used in the present daims.

The present invention is readily carried out. Dextrose and optionally a specified amount of sorbitol are polymerized in the presence of the specified amount of citric acid according to methods earlier disclosed by Rennhard in U.S. Patents cited above, preferably by a continuous process such as that exemplified below. The resulting polydextrose product, which corresponds to that of Rennhard, is then solubilized in water, preferably at high concentration, e.g., 60% w/w, and the resultant solution passed through a column of weakly basic ion exchange resin or of an adsorption resin. In either case, substantially dry, modified polydextrose, now containing less than 0.1 mol % (0.12 weight %) of free citric acid and 0.01 to 0.3 mol % (0.012 to 0.36 weight %) of bound citric acid, is recovered from the eluate by conventional means, e.g., by removing the water under vacuum and/or the addition of a non-solvent such as alcohol. A preferred method is to recover the polydextrose as a melt in a thin film evaporator and to solidify the melt by cooling.

The free and bound citric acid are determined by HPLC. In the free citric acid assay, 0.050 mL of a 100 mg/mL solution of the polydextrose is injected at the top of a Biorad Cation H guard column (cat. no. 125-0129) which is in series with a BioRad Aminex HPX-87H analytical column (cat. no. 02833). The mobile phase is 0.036N $H_2SO_4$, the flow rate is 0.6 mL/minute, and the temperature is ambient. Citric acid is detected by its ultraviolet absorption at 210 nm, and is measured against a standard citric acid solution (0.8 mg/mL) chromatographed in like manner. The citric acid chromatographic peak, which appears at a retention time of about 8 minutes, is sometimes superimposed on the trailing edge of an unidentified larger peak. When necessary, it is resolved from this peak by tangential skimming, a well-known method which is described, for example, on page 13 of chapter 6 of the Spectra-Physics SP4270 Operator's Manual, copyright 1982. Total citric acid (free and that bound as ester) is determined by adding 2.0 mL of 2.5N NaOH to 5 mL of a 100 mg/mL solution of polydextrose, heating the resulting basic solution at 70°C for 2 hours, cooling and acidifying the hydrolysate with 2.0 mL of 2.88N $H_2SO_4$, diluting the hydrolysate to 10 mL with mobil phase, and analyzing for citric acid by HPLC by the same method. Bound citric acid is calculated as total citric acid less free citric acid.

Average molecular weight ($M_n$) values were determined by using methods earlier described by Rennhard in the patents cited above. See also Isbell, J. Res. Natl. Bur. Stds. 24, 241 (1940).

The present improved polydextrose is incorporated into foods according to methods previously disclosed by Rennhard and Torres in the three U.S. patents cited above, and as further exemplified below.

The improved taste of food products prepared with present modified polydextrose is reflected in the so-called hedonic test, a common method of measuring food acceptance. This test employs a taste panel, generally 15-20 in number. It is a straight acceptance test, and does not necessarily require an experienced panel. However in the present evaluations an experienced panel was used. Panelists were given coded samples to rate for acceptance by checking a point on the so-called Hedonic scale as shown in Table I. At

## TABLE I

### Hedonic Scale for Evaluating Foods

#### Scale

| | |
|---|---|
| 9 | Like ____Extremely |
| 8 | Like ____Very Much |
| 7 | Like ____Moderately |
| 6 | Like ____Slightly |
| 5 | Neither Like ____Nor Dislike |
| 4 | Dislike ____Slightly |
| 3 | Dislike ____Moderately |
| 2 | Dislike ____Very Much |
| 1 | Dislike ____Extremely |

the same time the panelists were given a space to provide optional comments. In a special form of the hedonic test, generally used in the present studies, pairs of coded food samples, one containing conventional, unimproved polydextrose and one containing present modified, improved polydextrose were compared side by side, without the panel knowing which sample contained the improved polydextrose. The hedonic score was calculated as the numerical average of the individual scores assigned by the individual panel members.

Through experience, it has been found that preparation and test of unflavored hard candy represents an excellent method for assigning a hedonic score to individual bulk lots of polydextrose. In this test, polydextrose 50% in water (49.48 wt%) and lycasin 50% in water (49.49 wt %) were boiled to 157-160°C in an oil bath at 180°C and cooled to 140°C. Citric acid (0.80 wt %) and alitame 10% triturate in mannitol (0.23 wt %) were added with thorough stirring. The mass was transferred to a lightly oiled marble slab, cooled to 80°C, and stamped into hard candy. The hedonic value which was determined for the resulting hard candies was the hedonic value assigned to the bulk polydextrose.

The present invention is illustrated by the following examples. However, it should be understood that the invention is not limited to the specific details of these examples.

EXAMPLE 1

Unimproved Polydextrose

Dextrose monohydrate, sorbitol and citric acid were continuously and intimately mixed in the following proportions by weight: dextrose monohydrate/sorbitol 89.8:10.2 to 90.3:9.7, with citric acid at a level of 0.9 to 1.0% of the total weight. This blend was continuously fed to a reactor operating at an average temperature of 137°C and at a pressure in the range of 4.1 to 4.6 psia (28.3 to 31.7 KPa). The feed rate was adjusted to achieve at least 96% polymerization as determined by analysis of residual glucose by the method described on page 59 of the Second Supplement to the Third Edition of the Food Chemicals Codex, (National Academy Press, copyright 1986). The following data were obtained from three representative batches of the polydextrose product: free citric acid 0.35, 0.47 and 0.37 wt %; and citric acid bound as ester 0.65, 0.54 and 0.60 wt %, respectively.

Under these conditions, the 0.9 to 1.0 wt % of citric acid used as catalyst is calculated to be 0.92 to 1.02 mol %, 0.97 mol % on average. The total of free and bound citric acid in the polydextrose product will likewise be 0.97 mol %. From the ratios of free and bound citric acid determined analytically, one calculates for the above three representative batches of polydextrose: free citric acid 0.34, 0.45 and 0.37 mol %; bound citric acid 0.63, 0.52 and 0.60 mol %, respectively (vide supra).

The hedonic scores for the same three batches were 3.7, 4.8 and 5.1, respectively.

## EXAMPLE 2

### Improved Polydextrose by Ion Exchange Treatment

A bulk lot of polydextrose, prepared as described in Example 1 (having a hedonic score of 5.4, and $M_n$, number average molecular weight, 4700), was dissolved in water to make a 845 lbs (384 kg). of a 60% w/w solution. The solution was passed through a freshly prepared column of 0.59 cubic feet (16.7 litres) of Rohm & Haas Amberlite IRA 93 anion resin. IRA 93 is a macroreticular resin containing tertiary amine functionality on a styrenedivinylbenzene matrix. The solution was maintained at 50 to 55°C. Water initially displaced from the column was discarded and, over a 7.5 hour period, 735 lbs (334 kg). of purified polydextrose solution was collected. The pass was discontinued, and, in order to make polymer recovery nearly quantitative, the residual polydextrose was eluted from column with about 2 bed volumes of water. The resulting diluted eluant was used in the make-up of the next batch of 60% w/w solution. The resin was regenerated using the manufacturer's recommended procedure. In a like fashion the main solution was passed again through the resin column. The polydextrose was reisolated by evaporating the water in a thin film evaporator and solidifying the melt in trays. This process was repeated twice more and the three batches blended together. A representative sample of the blend was analyzed: citric acid 0.001 wt %, citric acid bound as ester 0.076 wt %. By using the factor of 162/192, free citric acid is calculated to be 0.001 mol %, and bound citric acid is calculated as 0.064 mol %. The hedonic score was 6.9, and $M_n$ was 4900.

Ten batches total were prepared in like manner. These showed citric acid levels ranging from less than 0.001 to 0.006 wt %, bound citric acid levels ranging from 0.061 to 0.129 wt %, and hedonic scores ranging from 6.42 to 6.94 (average, 6.71).

A further batch was prepared using only a single pass on the ion same exchange resin. It showed free citric acid 0.004 wt %; bound citric acid 0.224 wt %; and a hedonic score of 6.46; and $M_n$ 4500.

## EXAMPLE 3

### Improved Polydextrose by Adsorption Resin Treatment

A 60% w/w solution of unimproved polydextrose ($M_n$ 4700, hedonic score 5.4) was passed through a fresh column of Dow XU-40285.00 adsorbent resin. XU-40285.00 is a dimethyl amine functionalized chloromethylated macroporous copolymer of styrene and divinylbenzene. 50 cc of resin maintained at 50°C was used to prepare 450 cc of solution in 3.7 hours. The solution was diluted to about 20% and filtered. The water was removed under vacuum at 50°C to produce a dry solid. The product showed $M_n$ 4400 and a hedonic score of 6.9.

## EXAMPLE 4

### Comparison of Hard Candies Made with Improved and Unimproved Polydextrose

Two hard candies A and B were made using the following ingredients and procedure.

| Ingredients | Weight % |
| --- | --- |
| Polydextrose 50% solution in water | 49.41 |
| Lycasin 50% solution in water | 49.41 |
| Citric acid | 0.80 |
| FD&C yellow #6, 10% solution in water | 0.06 |

(continued)

| Ingredients | Weight % |
|---|---|
| Orange Flavor N & ATP #5615[1] | 0.09 |
| Alitame 10% triturate in mannitol (sweetener) | 0.23 |
| Total | 100.00 |

[1] Givaudan Corp.

## Procedure

The lycasin and polydextrose solutions were combined, and, with stirring, cooked to 157-160°C in an oil bath set at 180°C. The mixture was removed from the oil bath and cooled to 140°C. The citric acid, flavor, color and alitame triturate were added with thorough stirring. The resulting hot mass was transferred to a lightly oiled marble slab, cooled to about 80°C, and stamped using conventional laboratory hard candy equipment.

Hard candy A was made using unimproved polydextrose having a hedonic value of 5.4 and prepared by the method of Example 1. Hard candy B was made using the improved polydextrose of Example 2, prepared from the same unimproved polydextrose.

## Product Evaluation

Hard candies A and B were similar in texture and color. However, when presented to panelists for side by side comparison of taste acceptability, candy B was rated superior in taste quality to candy A. The hedonic score for A was 5.1 and for B was 7.7.

## EXAMPLE 5

Comparison of Frozen Deserts Made with Improved and Unimproved Polydextrose

Two frozen deserts A and B were prepared using the following ingredients and methods.

| Ingredients | Weight % |
|---|---|
| Cream (36% butterfat) | 20.83 |
| Non-fat dry milk | 11.92 |
| Water | 38.19 |
| Polydextrose 70% solution in water, pH adjusted to 5.5 with $NaHCO_3$ | 25.00 |
| Gelatin, 125 Bloom | 0.50 |
| Avicel RC 591[1] | 1.00 |
| Drewmulse 700 E (emulsifier) [2] | 0.30 |
| Vanilla extract | 1.50 |
| Alitame 1% solution in water (sweetener) | 0.76 |
| Total | 100.00 |

[1] FMC Corporation, American Viscose Division

[2] PVO International Inc.

## Procedure

All of the ingredients except vanilla extract and alitame solution were combined and pasteurized by rapidly heating to 71°C and maintaining that temperature for 30 minutes. The mixture was then homogenized at 2500 psi (17 MPa) in the first stage and at 500 psi (3.4 MPa) in the second stage of a laboratory homogenizer. The mixture was rapidly cooled to 4°C, the alitame solution and vanilla extract added, and, after mixing thoroughly, stored in the refrigerator overnight. Finally, the mixture was frozen in an ice cream freezer at 90 to 100 % overrun, then transferred into cups and stored in a freezer at -25°F (-31.6°C) for at least two days before evaluation.

Frozen deserts A and B were prepared from unimproved and improved polydextrose, respectively, as in the preceding Example.

Product Evaluation

Frozen deserts A and B exhibited comparable color and texture. However, in side by side hedonic testing, the taste quality of frozen dessert B was determined to be superior to that of frozen dessert A. The hedonic score for A was 5.8, and for B was 7.1.

EXAMPLE 6

Comparison of Pound Cakes Made With Improved and Unimproved Polydextrose

Two sugarless and fat-free pound-cakes A and B were baked using the following ingredients and method.

| Ingredients | Weight % |
|---|---|
| Part I: | |
| Polydextrose | 25.76 |
| N-Flate (shortening replacement) [1] | 4.10 |
| Part II: | |
| Sodium bicarbonate | 0.70 |
| Artificial Vanilla Flavor PFW 6100720[2] | 0.08 |
| Cake flour | 21.60* |
| Solka Floc B-200 (Cellulose) [3] | 2.00 |
| Glucono-delta-lactone | 1.30 |
| Part III: | |
| Salt | 0.34 |
| Xanthan gum - Keltrol F1 [4] | 0.10 |
| Whole eggs | 21.75 |
| Water | 8.90 |
| Part IV: | |
| Artificial Butter Concentrate B [5] | 0.17 |
| Alitame 1% solution in water (sweetener) | 1.50 |
| Water | 11.50 |
| Total | 100.00 |

(1) National Starch Co.

(2) Hercules Inc. Food and Flavor Ingredient Group

(3) James River Corp.

(4) Kelco Co.

(5) Consumer Flavoring Extract Co.

*In cake B, cake flour was reduced by 0.25 weight %, and 0.25 weight % of citric acid added to Part I ingredients.

Procedure (The formulation was scaled to 300 grams)

1. Premix Part I was premixed in a 1½ quart (1.4 L) mixing bowl with a Sunbeam Mixmaster.
2. Part II ingredients were added slowly and mixed in with double paddle to produce a uniform dry mix.
3. Part III ingredients were premixed in a separate container, then added to the above dry mixed ingredients. Mixing, while scraping down the sides of the bowl, was continued until the mixture was smooth.
4. Part IV ingredients were then added, and the batter mixed in until smooth and uniform.
5. A portion of the mixture (230 grams) was weighed and baked at 350°F (177°C) for 25 minutes in a lightly greased 4" (10 cm) by 6" (15cm) loaf pan.

Cakes A and B were made with the unimproved and improved polydextrose, respectively, as in Example 4.

Product Evaluation

The two cakes were similar in color, volume, crumb and crust structure. However, they differed organoleptically in side by side hedonic testing. Sensory panel test results indicated that the majority of panelists (78%) preferred the taste of Cake 3 over Cake A, with hedonic scores of 6.75 and 5.75, respectively.

## EXAMPLE 7

### Comparison of Cookies Made with Improved and Unimproved Polydextrose

Two batches of sugarless butter cookies A and B were baked using the following ingredients and procedure.

| Ingredients | Weight % |
|---|---|
| Part I: | |
| Polydextrose | 25.00 |
| Mannitol | 10.00 |
| Part II: | |
| Salt | 0.11 |
| Butter | 12.18 |
| Whole eggs | 10.15 |
| Vanilla Extract | 0.81 |
| Artificial Butter Flavor Concentrate B [1] | 0.10 |
| Part III: | |
| Water | 1.00 |
| Alitame 1% solution in water (sweetener) | 1.60 |
| Sodium Bicarbonate | 0.15 |
| Part IV: | |
| Glucono-delta-lactone | 0.26 |
| All purpose flour | 35.64 |
| Starch H-50[2] | 2.00 |
| Flour substitute blend [3] | 1.00 |
| Total | 100.00 |

[1] Consumer Flavoring Extract Co.

[2] National Starch Co.

[3] Blend comprised of: 1.02% Xanthan gum, 5.10% lecithin powder and 93.88% Solka-Floc BW 200 (by weight)

### Procedure

1. The ingredients at Part I were creamed at #2 speed in a Sunbeam Mixmaster for about 1 minute, and at #4 speed for 3 minutes.
2. The ingredients of Part II were added and mixed in at #2 speed for 45 seconds.
3. The ingredients of Part III were added and mixed in at #4 speed for 35 seconds.
4. The premixed ingredients of Part IV were added and mixed in at #4 speed for 30 seconds.
5. A cookie gun was filled with the mixture and cookies formed into desired shape on a slightly greased cookies sheet, then baked at 375°F (191°C) for 8 minutes (or until light golden, being careful not to overbake), and the hot cookies transferred to a cooling rack.

Cookie batches A and B were made with the unimproved and improved polydextrose, respectively, as in Example 4.

### Product Evaluation

The two cookie batches exhibited comparable color, crust and crumb structure. When presented side by side to a panel of tasters, the majority of judges (71%) found the cookies of batch B had a more favorable taste quality than the cookies of batch A. The hedonic score for batch B was 6.9, while that for batch A was 5.3.

## Claims

**Claims for the following Contracting States : AT, BE, CH, DE, DK, FR, GB, IT, LI, LU, NL, SE**

1. A water-soluble highly-branched polydextrose wherein the linkage $1\rightarrow6$ predominates, having a number average molecular weight between 1,500 and 18,000 and containing from 0.058 to 0.1075 mol percent (0.061 to 0.129 weight percent) of citric acid bound in the form of ester groups.

2. A polydextrose of claim 1 which further contains less than 0.1 mol percent (0.12 weight percent) of free citric acid.

3. A polydextrose of claim 1 further containing 5 to 15% by weight of sorbitol residues.

4. A polydextrose of claim 2 containing less than 0.05 mol percent (0.06 weight percent) of free citric acid.

5. A polydextrose of claim 4 further containing 8 to 12% by weight of sorbitol residues.

6. A foodstuff comprising a polydextrose of claim 1.

7. A foodstuff of claim 6 further comprising one or more sweetening agents selected from the group consisting of alitame, aspartame, acesulfame and saccharin.

8. A dry low calorie sweetener composition comprising at least 50% by weight of a polydextrose of claim 1 and one or more sweetening agents selected from the group consisting of alitame, aspartame, acesulfame and saccharin.

9. A process for preparing a water-soluble highly-branched polydextrose wherein the linkage $1\rightarrow6$ predominates, having number average molecular weight between 1,500 and 18,000 and containing less than 0.1 mol percent (0.12 weight percent) of free citric acid and from 0.01 to 0.3 mol percent (0.012 to 0.36 weight percent) of citric acid bound in the form of ester groups, which comprises the steps of:

    (a) melting dextrose containing 0.5 to 3 mol percent (0.53 to 3.2 weight percent) of citric acid at a temperature below its decomposition point, maintaining said molten mixture at a temperature of 140 to 295°C and at reduced pressure in the substantial absence of water until substantial polymerization occurs and simultaneously removing water formed during said polymerization; and
    (b) passing a concentrated aqueous solution of the resulting product through an adsorbent resin or a weakly basic ion exchange resin, and recovering said polyglucose substantially free of water.

10. A process of claim 9 wherein the dextrose is in the form of its monohydrate, 8 to 12% by weight sorbitol is incorporated into the mixture of step (a) prior to melting and polymerization and the level of citric acid in the polymerization is in the range of 0.7 to 1.3 mol percent (0.68 to 1.27 weight percent).

**Claims for the following Contracting States : ES, GR**

1. A process for preparing a water-soluble highly-branched polydextrose wherein the linkage $1\rightarrow6$ predominates, having a number average molecular weight between 1,500 and 18,000 and containing less than 0.1 mol percent (0.12 weight percent) of free citric acid and from 0.01 to 0.3 mol percent (0.012 to 0.36 weight percent) of citric acid bound in the form of ester groups, which comprises the steps of:

    (a) melting dextrose containing 0.5 to 3 mol percent (0.53 to 3.2 weight percent) of citric acid at a temperature below its decomposition point, maintaining said molten mixture at a temperature of 140 to 295°C and at reduced pressure in the substantial absence of water until substantial polymerization occurs and simultaneously removing water formed during said polymerization; and
    (b) passing a concentrated aqueous solution of the resulting product through an adsorbent resin or a weakly basic ion exchange resin, and recovering said polyglucose substantially free of water.

2. A process of claim 1 wherein the dextrose is in the form of its monohydrate and 8 to 12% by weight of sorbitol is incorporated into the mixture of step (a) prior to melting and polymerization.

3. A process of claim 1 wherein the pressure is less than 300 mm of mercury (40 KPa) and the level of citric acid in the polymerization is in the range of 0.7 to 1.3 mol percent (0.68 to 1.27 weight percent).

4. A process of claim 1 wherein the ion exchange resin contains tertiary amine functionality on a matrix which is a copolymer of styrene and divinylbenzene.

5. A process of claim 4 wherein the ion exchange resin is Amberlite IRA-93®.

6. A process of claim 2 wherein the level of citric acid in the polymerization is in the range of 0.7 to 1.2 mol percent (0.68 to 127 weight percent), and the resin is a weakly basic ion exchange resin.

7. A process of claim 6 wherein the weakly basic ion exchange resin contains tertiary amine functionality on a matrix which is a copolymer of styrene and divinylbenzene.

8. A process of claim 7 wherein the polyglucose is recovered by film evaporation.

9. A process of claim 1 wherein the resin is an adsorbent resin which is dimethylamine functionalized chloromethylated copolymer of styrene or divinylbenzene.

**Patentansprüche**

**Patentansprüche für folgende Vertragsstaaten : AT, BE, CH, DE, DK, FR, GB, IT, LI, LU, NL, SE**

1. Wasserlösliche stark verzweigte Polydextrose; worin die Bindung 1→6 überwiegt, mit einem zahlenmittleren Molekulargewicht zwischen 1500 und 18000 und mit 0,058 bis 0,1075 Mol-% (0,061 bis 0,129 Gew.-%) Zitronensäure, gebunden in Form von Estergruppen.

2. Polydextrose nach Anspruch 1, weniger als 0,1 Mol-% (0,12 Gew.-%) freie Zitronensäure enthaltend.

3. Polydextrose nach Anspruch 1, zusätzlich 5 bis 15 Gew.-% Sorbitreste enthaltend.

4. Polydextrose nach Anspruch 2, enthaltend weniger als 0,05 Mol-% (0,06 Gew.-%) freie Zitronensäure und 0,02 bis 0,2 Mol-% (0,024 bis 0,24 Gew.-%) Zitronensäure, gebunden in Esterform.

5. Polydextrose nach Anspruch 4, zusätzlich 8 bis 12 Gew.-% Sorbitreste enthaltend.

6. Nahrungsmittel, enthaltend eine Polydextrose nach Anspruch 1.

7. Nahrungsmittel nach Anspruch 6, zusätzlich umfassend eines oder mehrere Süßungsmittel, ausgewählt aus der Gruppe, bestehend aus Alitam, Aspartam, Acesulfam und Saccharin.

8. Trockenes kalorienarmes Süßungsmittel, umfassend mindestens 50 Gew.-% Polydextrose nach Anspruch 1 und eines oder mehrere Süßungsmittel, ausgewählt aus der Gruppe, bestehend aus Alitam, Aspartam, Acesulfam und Saccharin.

9. Verfahren zur Herstellung einer wasserlöslichen hochverzweigten Polydextrose, worin die Bindung 1→6 überwiegt mit einem zahlenmittleren Molekulargewicht zwischen 1500 und 18000 und enthaltend weniger als 0,1 Mol-% (0,12 Gew.-%) freie Zitronensäure und von 0,01 bis 0,3 Mol-% (0,012 bis 0,36 Gew.-%) Zitronensäure, gebunden in Form von Estergruppen, umfassend die Schritte:

(a) Schmelzen von Dextrose, enthaltend etwa 0,5 bis 3 Mol-% (0,53 bis 3,2 Gew.-%) Zitronensäure bei einer Temperatur unterhalb ihres Zersetzungspunkts, Halten des geschmolzenen Gemisches bei einer Temperatur von 140 bis 295°C und bei vermindertem Druck in überwiegender Abwesenheit von Wasser bis im wesentlichen Ausmaß Polymerisation stattfindet und gleichzeitig Entfernen von Wasser, das sich während der Polymerisation bildet; und
(b) Leiten einer konzentrierten wässerigen Lösung des erhaltenen Produkts über ein Adsorberharz oder ein schwach basisches Ionenaustauscherharz und Gewinnen der im wesentlichen wasserfreien Polyglucose.

**10.** Verfahren nach Anspruch 9, wobei die Dextrose in Form ihres Monohydrats vorliegt, 8 bis 12 Gew.-% Sorbit in das Gemisch im Schritt (a) vor dem Schmelzen und der Polymerisation zugegeben werden und der Anteil an Zitronensäure bei der Polymerisation im Bereich von 0,7 bis 1,3 Mol-% (0,68 bis 1,27 Gew.-%) liegt.

**Patentansprüche für folgende Vertragsstaaten : ES, GR**

**1.** Verfahren zur Herstellung einer wasserlöslichen hochverzweigten Polydextrose, worin die Bindung 1→6 überwiegt mit einem zahlenmittleren Molekulargewicht zwischen 1500 und 18000 und enthaltend weniger als 0,1 Mol-% (0,12 Gew.-%) freie Zitronensäure und von 0,01 bis 0,3 Mol-% (0,012 bis 0,36 Gew.-%) Zitronensäure, gebunden in Form von Estergruppen, umfassend die Schritte:

(a) Schmelzen von Dextrose, enthaltend 0,5 bis 3 Mol-% (0,53 bis 3,2 Gew.-%) Zitronensäure bei einer Temperatur unterhalb ihres Zersetzungspunkts, Halten des geschmolzenen Gemisches bei einer Temperatur von 140 bis 295°C und bei vermindertem Druck in überwiegender Abwesenheit von Wasser bis im wesentlichen Ausmaß Polymerisation stattfindet und gleichzeitig Entfernen von Wasser, das sich während der Polymerisation bildet; und
(b) Leiten einer konzentrierten wässerigen Lösung des erhaltenen Produkts über ein Adsorberharz oder ein schwach basisches Ionenaustauscherharz und Gewinnen der im wesentlichen wasserfreien Polyglucose.

**2.** Verfahren nach Anspruch 1, wobei die Dextrose in Form ihres Monohydrats vorliegt und 8 bis 12 Gew.-% Sorbit in das Gemisch von Schritt (a) vor dem Schmelzen und der Polymerisation eingegeben werden.

**3.** Verfahren nach Anspruch 1, wobei der Druck weniger als 300 mm Quecksilber (40 kPa) beträgt und der Anteil an Zitronensäure bei der Polymerisation im Bereich von 0,7 bis 1,3 Mol-% (0,68 bis 1,27 Gew.-%) liegt.

**4.** Verfahren nach Anspruch 1, wobei das Ionenaustauscherharz tertiäre Aminfunktionalitäten auf einer Matrix trägt, die ein Copolymer aus Styrol und Divinylbenzol darstellt.

**5.** Verfahren nach Anspruch 4, wobei das Ionenaustauscherharz Amberlite IRA-93® ist.

**6.** Verfahren nach Anspruch 2, wobei der Anteil an Zitronensäure bei der Polymerisation im Bereich von 0,7 bis 1,2 Mol-% (0,68 bis 1,27 Gew.-%) liegt und das Harz ein schwach basisches Ionenaustauscherharz ist.

**7.** Verfahren nach Anspruch 6, wobei das schwach basische Ionenaustauscherharz tertiäre Aminfunktionalitäten auf einer Matrix enthält, die ein Copolymer aus Styrol und Divinylbenzol ist.

**8.** Verfahren nach Anspruch 7, wobei die Polyglucose durch Dünnschichtverdampfung gewonnen wird.

**9.** Verfahren nach Anspruch 1, wobei das Harz ein Adsorberharz ist, das ein Dimethylamin-funktionalisiertes chlormethyliertes Copolymerisat von Styrol oder Divinylbenzol ist.

**Revendications**

**Revendications pour les Etats contractants suivants : AT, BE, CH, DE, DK, FR, GB, IT, LI, LU, NL, SE**

**1.** Polydextrose hydrosoluble fortement ramifié dans lequel la liaison 1→6 prédomine, ayant une moyenne numérique du poids moléculaire de 1500 à 18 000 et contenant 0,058 à 0,1075 mole % (0,061 à 0,129 % en poids) d'acide citrique lié sous forme de groupes ester.

**2.** Polydextrose suivant la revendication 1, qui contient en outre moins de 0,1 mole % (0,12 % en poids) d'acide citrique libre.

**3.** Polydextrose suivant la revendication 1, contenant en outre 5 à 15 % en poids de résidus sorbitol.

4. Polydextrose suivant la revendication 2, contenant moins de 0,05 mole % (0,06 % en poids) d'acide citrique libre et 0,02 à 0,2 mole % (0,024 à 0,24 % en poids) d'acide citrique lié sous forme d'ester.

5. Polydextrose suivant la revendication 4, contenant en outre 8 à 12 % en poids de résidus sorbitol.

6. Produit alimentaire comprenant un polydextrose suivant la revendication 1.

7. Produit alimentaire suivant la revendication 6, comprenant en outre un ou plusieurs agents édulcorants choisis dans le groupe consistant en alitame, aspartame, acésulfame et saccharine.

8. Composition d'agent édulcorant sèche à teneur basse en calories, comprenant au moins 50 % en poids d'un polydextrose suivant la revendication 1 et un ou plusieurs agents édulcorants choisis dans le groupe consistant en alitame, aspartame, acésulfame et saccharine.

9. Procédé de préparation d'un polydextrose hydrosoluble fortement ramifié dans lequel la liaison 1→6 prédomine, ayant une moyenne numérique du poids moléculaire de 1500 à 18 000 et contenant moins, de 0,1 mole % (0,12 % en poids) d'acide citrique libre et 0,01 à 0,3 mole % (0,012 à 0,36 % en poids) d'acide citrique lié sous forme de groupes ester, qui comprend les étapes:

   (a) de fusion d'un dextrose contenant environ 0,5 à 3 moles % (0,53 à 3,2 % en poids) d'acide citrique à une température inférieure à son point de décomposition, de maintien dudit mélange fondu à une température de 140 à 295°C et sous pression réduite pratiquement en l'absence d'eau jusqu'à ce qu'une polymérisation notable se produise, et d'élimination simultanée de l'eau formée au cours de ladite polymérisation; et
   (b) de passage d'une solution aqueuse concentrée du produit résultant à travers une résine adsorbante ou une résine échangeuse d'ions faiblement basique, et de séparation dudit polyglucose pratiquement dépourvu d'eau.

10. Procédé suivant la revendication 9, dans lequel le dextrose est sous forme de son monohydrate, une quantité de 8 à 12 % en poids de sorbitol est incorporée au mélange de l'étape (a) avant la fusion et la polymérisation et la quantité d'acide citrique dans la polymérisation est comprise dans l'intervalle de 0,7 à 1,3 mole % (0,68 à 1,27 % en poids).

**Revendications pour les Etats contractants suivants : ES, GR**

1. Procédé de préparation d'un polydextrose hydrosoluble fortement ramifié dans lequel la liaison 1→6 prédomine, ayant une moyenne numérique du poids moléculaire de 1500 à 18 000 et contenant moins de 0,1 mole % (0,12 % en poids) d'acide citrique libre et 0,01 à 0,3 mole % (0,012 à 0,36 % en poids) d'acide citrique lié sous forme de groupes ester, qui comprend les étapes:

   (a) de fusion d'un dextrose contenant environ 0,5 à 3 moles % (0,53 à 3,2 % en poids) d'acide citrique à une température inférieure à son point de décomposition, de maintien dudit mélange fondu à une température de 140 à 295°C et sous pression réduite pratiquement en l'absence d'eau jusqu'à ce qu'une polymérisation notable se produise, et d'élimination simultanée de l'eau formée au cours de ladite polymérisation; et
   (b) de passage d'une solution aqueuse concentrée du produit résultant à travers une résine adsorbante ou une résine échangeuse d'ions faiblement basique, et de séparation dudit polyglucose pratiquement dépourvu d'eau.

2. Procédé suivant la revendication 1, dans lequel le dextrose est sous forme de son monohydrate et une quantité de 8 à 12 % en poids de sorbitol est incorporée au mélange de l'étape (a) avant fusion et polymérisation.

3. Procédé suivant la revendication 1, dans lequel la pression est inférieure à 300 mm de mercure (40 kPa) et la quantité d'acide citrique dans la polymérisation est comprise dans l'intervalle de 0,7 à 1,3 mole % (0,68 à 1,27 % en poids).

4. Procédé suivant la revendication 1, dans lequel la résine échangeuse d'ions contient une fonctionnalité amine tertiaire sur une matrice qui est un copolymère de styrène et de divinylbenzène.

**5.** Procédé suivant la revendication 4, dans lequel la résine échangeuse d'ions est l'Amberlite IRA-93®.

**6.** Procédé suivant la revendication 2, dans lequel la quantité d'acide citrique dans la polymérisation est comprise dans l'intervalle de 0,7 à 1,2 mole % (0,68 à 1,27 % en poids), et la résine est une résine échangeuse d'ions faiblement basique.

**7.** Procédé suivant la revendication 6, dans lequel la résine échangeuse d'ions faiblement basique contient une fonctionnalité amine tertiaire sur une matrice qui est un copolymère de styrène et de divinylbenzène.

**8.** Procédé suivant la revendication 7, dans lequel le polyglucose est séparé par évaporation pelliculaire.

**9.** Procédé suivant la revendication 1, dans lequel la résine est une résine adsorbante qui consiste en un copolymère chlorométhylé de styrène ou de divinylbenzène fonctionnalisé avec de la diméthylamine.